# EUROPEAN PATENT SPECIFICATION

(11) **EP 2 437 206 B1**
(45) Date of publication and mention of the grant of the patent: **06.03.2019**
(21) Application number: 11182170.8
(22) Date of filing: 21.09.2011
(51) Int. Cl.: G06N 3/02

(54) **Method and system to predict power plant performance**
Verfahren und System zur Vorhersage der Kraftwerkleistung
Procédé et système pour prédire la performance d'une centrale

(30) Priority: 30.09.2010 US 895293
(43) Date of publication of application: 04.04.2012
(73) Proprietor: General Electric Company, Schenectady, NY 12345 (US)
(72) Inventor: Subbu, Rajesh Venkat, Niskayuna NY 12309 (US); Fujita, Lincoln Mamoru, Salem VA 24153 (US); Yan, Weizhong, Niskayuna NY 12309 (US); Ouellet, Noemie Dion, Niskayuna NY 12309 (US); Mitchell, Richard J., Greenville SC 29602 (US); Bonissone, Piero Patrone, Niskayuna NY 12309 (US); Hoskin, Robert Frank, Niskayuna NY 12309 (US)
(74) Representative: Foster, Christopher Michael

(56) References cited:
- EP-A1- 1 538 319
- GB-A- 2 433 145
- PIERO P. BONISSONE ET AL: "Fast meta-models for local fusion of multiple predictive models", APPLIED SOFT COMPUTING, vol. 11, no. 2, 20 March 2008 (2008-03-20) , pages 1529-1539, XP55017402, ISSN: 1568-4946, DOI: 10.1016/j.asoc.2008.03.006
- RAJ SUBBU ET AL: "A Review of Two Industrial Deployments of Multi-criteria Decision-making Systems at General Electric", COMPUTATIONAL INTELLIGENCE IN MULTICRITERIA DECISION MAKING, IEEE SYMP OSIUM ON, IEEE, PI, 1 April 2007 (2007-04-01), pages 136-145, XP031096934, ISBN: 978-1-4244-0702-6
- RAJ SUBBU ET AL: "Management of Complex Dynamic Systems based on Model-Predictive Multi-objective Optimization", COMPUTATIONAL INTELLIGENCE FOR MEASUREMENT SYSTEMS AND APPLICATIONS, P ROCEEDINGS OF 2006 IEEE INTERNATIONAL CONFERENCE ON, IEEE, PI, 1 July 2006 (2006-07-01), pages 64-69, XP031035504, ISBN: 978-1-4244-0244-1

## Description

The subject matter disclosed herein relates generally to predictive modeling of power plant performance, and more specifically, to methods and systems to robustly predict power plant performance, availability and degradation.

Modern power plants typically include sophisticated controls to help manage the various facets of their operation. However, as the controls become more sophisticated, it may be more difficult for operating personnel to anticipate control responses. As a result, it may become more difficult for such personnel to predict the future capacity, capability, and/or emissions of their power generation equipment.

While models, such as physics-based models, may be a useful tool in predicting the performance of new power generation equipment, the underlying assumptions such models utilize may deviate from reality over time, making the models less and less useful over time. That is, as plants and equipment age, and as new control mechanisms are applied, the performance of a piece of equipment may deviate from how it performed when new. As a result, physics-based models based on idealized performance may become increasingly inaccurate or unreliable.

To compensate for such degradation over time, and the associated inaccuracy of the predictive models, a power plant may periodically re-baseline the performance of the equipment, allowing the associated physics-based models to be tuned or calibrated to the new baseline. Such tuning, however, may be time consuming and may require methodical experimentation, during which time the equipment may be offline, thus resulting in lost revenues.

Bonissone, Piero P *et al* entitled "Fast meta-models for local fusion of multiple predictive models" concerns a fusion mechanism that is a meta-model, for fusing multiple models based on local performance. Multiple models are created using the historical dataset and various local fusion strategies are compared, including a neighbourhood-based approach and a model-based approach. Experimental results for the prediction of power plant parameters are disclosed.

The present invention provides a method for predicting a parameter of interest for a power plant and a processor-based system as defined in the appended claims.

Various features, aspects, and advantages of the present invention will become better understood when the following detailed description is read with reference to the accompanying drawings in which like characters represent like parts throughout the drawings, wherein:
FIG. 1 is a flow diagram of a representative fossil fuel power plant that may be utilized in accordance with an embodiment of the present invention;
FIG. 2 is a block diagram showing how information is exchanged within an electrical power distribution system;
FIG. 3 is an exemplary processor-based system for implementing various aspects of the present invention in accordance with one embodiment of the present disclosure;
FIG. 4 is a diagram of a system for generating at least one prediction for power plant performance, availability, or degradation in accordance with certain disclosed embodiments;
FIG. 5 is a block diagram of a hybrid predictive model used for generating at least one prediction output;
FIG. 6 is a flow chart for a method of performance based re-training and re-tuning of at least one hybrid predictive model; and
FIG. 7 is a flow chart for a method of generating and communicating at least one prediction output based on a hybrid predictive model.

The present disclosure is directed to predictive modeling approaches that may be applied to one or more power plants to forecast future power generation capability and/or emission production throughout the lifecycle of the plants without needing to periodically re-baseline the performance of the plants. In particular, the present approach allows for the robust and accurate prediction of performance capability, availability, and/or degradation of one or more power plants. Examples of predicted variables may include, but are not limited to, peak load, base load, turn down load, steam turbine load, and/or emissions values. The predicted values may be used in market-based contexts related to power trading, power management, and/or emission control. In addition, the present approaches may be employed in contexts related to total-plant management and/or other situations where a plant or group of plants are evaluated and/or managed holistically instead of piece-meal.

In one embodiment, hybrid models are employed that are data-driven neural networks. In one such implementation, no equipment specific knowledge is needed for the model to operate accurately. Thus, in such an implementation, the hybrid model may be utilized with power generation equipment provided by any source. The hybrid models discussed herein are self-learning and self-maintaining to consistently provide accurate forecasts without human intervention.

Turning to the specifics of the disclosure, in general, a power plant's performance is partially dependent on equipment capabilities (e.g., ratings, age, and maintenance), environmental characteristics (e.g., ambient temperature, humidity, and pressure), fuel characteristics (e.g., temperature and energy content), and other factors. It is desirable for electricity providers to have the ability to accurately predict future power plant performance, availability, and/or degradation in order to meet the energy demands of electricity consumers without overproduction or underproduction of electricity. As discussed below, certain implementations for predicting the performance of a power plant or a group of power plants take into account some or all of these relevant factors and use a modeling technique to develop an accurate and robust prediction that may be used in evaluating and/or managing one or more power plants. One such disclosed model uses a hybrid approach that creates a self-adjusting and self-monitoring system, which minimizes equipment downtime and need for human interaction.

In particular, one such hybrid approach is based on the use of artificial neural network (ANN) modeling to provide a useful predictive model. Such data-driven models may be trainable using well-defined mathematical algorithms (e.g., learning algorithms). That is, such models may be developed by training them to accurately map process inputs onto process outputs based upon measured (i.e., observed) or other empirical process data. This training typically utilizes a diverse set of several input-output data vector records associated with the training algorithm. The trained models may then accurately represent the input-output behavior of the underlying processes.

A predictive model trained in accordance with such an algorithm, such as an ANN model, may be used to model and/or predict particular aspects of a system, such as a power plant. Thus, a power plant, to which the present disclosure is directed, can use predictive modeling techniques to predict future performance (i.e., output capabilities), future availability, and future degradation. For instance, performance of a particular type of power plant, such as a fossil fuel power plant, wind power plant, nuclear power plant, and/or solar power plant, or a group of such plants may be modeled in this manner and managed accordingly.

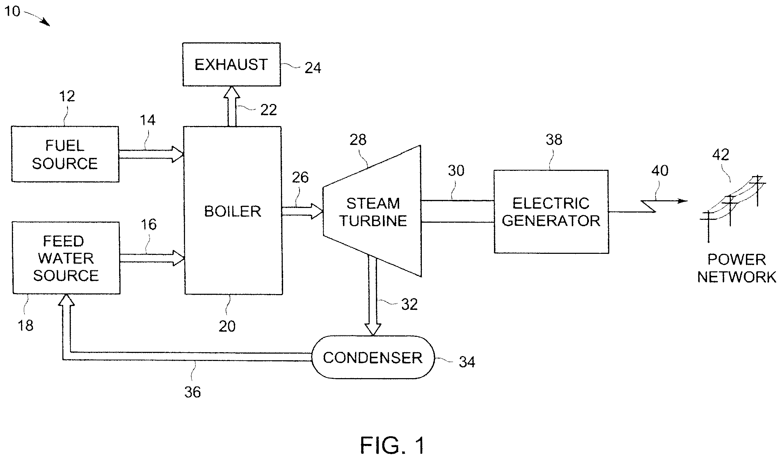

By way of example, one such type of plant is a fossil fueled power plant that transforms thermal energy from the combustion of fuels, such as gas, coal or oil, into rotational energy that is further converted into electrical energy. Turning to the figures, FIG. 1 is a flow diagram of a representative fossil fueled power plant 10 comprising one or more boilers and turbines or engines to generate power. As discussed herein, the performance of the power plant 10, and of the respective components embodied in the power plant, may be modeled to facilitate management of the power plant 10 (or of a larger group of power plants 10 that includes the depicted power plant) and/or to allow prediction of performance related variables related to the power plant, its constituent components, and/or a group of power plants that includes the depicted power plant.

The fossil fueled power plant 10 may be an individual power generating system or could be part of a larger power station or network of power plants or stations. For example, the fossil fueled power plant 10 may be one of multiple systems at a particular power station that belongs to a city or region-owned utility. That particular power station may in turn be only one of several in a network that also belongs to the city or region-owned utility and supports the electricity needs of the city or region.

In the depicted embodiment, the exemplary fossil fueled power plant 10 employs a prime mover in the form of a steam turbine 28. In alternative fossil fueled power plant designs, the prime mover may be a gas turbine or an internal combustion engine. The fossil fuel power plant 10 includes a boiler 20 that receives fuel 14 from a fuel source 12. The fuel 14 may be in solid, liquid, or gaseous form. For instance, the fuel 14 may be natural gas, coal, gasified coal, or petroleum (oil), among others. Notably, the type of fuel and associated characteristics, such as fuel temperature and fuel lower heating value (LHV), also known as energy content, may be important for accurate power plant predictions according to certain embodiments.

The boiler 20 may be furnace with a web of high pressure steel tubes along its walls. The tubes along the walls of the boiler 20 carry feed water 16. As discussed below, the feed water 16 is the means of transferring the heat energy from the burning fuel 14 into the rotational energy of the spinning steam turbine 28. The feed water 16 is water that is highly purified and demineralized to minimize corrosion. The feed water 16 comes from a feed water source 18, often a tank or storage vessel for the feed water, and may be preheated by feed water heaters before it reaches the boiler 20.

The fuel 14 is fed into the boiler 20 and combusted often creating a fire ball in the center of the boiler. This fire in turn heats the feed water 16 traveling through the network of tubes along the walls of the boiler 20. Flue gas 22 is generated from the combustion of the fuel 14 and is discharged into the air through the exhaust 24. The flue gas 22 may contain carbon dioxide, water vapor, and other substances such as nitrogen, nitrogen oxides (NOx), and sulfur oxides. In certain implementations, the flue gas 22 may be processed to remove or reduce some or all of these constituents.

The combustion of the fuel 14 transforms the feed water 16 into superheated steam 26. The superheated steam 26 travels away from the boiler 20 and flows into the steam turbine 28. The steam turbine 28 consists of multiple series of rows of angled blades attached to a rotor 30. When the blades are contacted with the moving superheated steam 26, the blades and rotor 30 rotate, similar in action to a windmill. The superheated steam 26 cools and expands as it enters and travels through the steam turbine 28 causing the pressure of the superheated steam 26 to drop. After the superheated steam 26 passes through the steam turbine 28, it exhausts as steam 32, and in some configurations, into the condenser 34. The condenser 34 may be a heat exchanger containing cooling water circulating in a multitude of long tubes. The steam 32 is condensed by flowing over the cool tubes. The condenser 34 cools the steam 32 and transforms it back into return feed water 36 to replenish the feed water source 18.

The steam turbine 28 is connected by the spinning rotor 30 to an electric generator 38. The electric generator 38 may, in some configurations, consist of the spinning rotor 30, a stationary stator, and miles of wound copper conductor to generate electricity 40. Next, the electricity 40 created is carried to the power network 42 by transmission lines. Finally, the power network 42 that consists of transformers and more transmission lines eventually carry the electricity 40 to the consumer.

In alternative fossil fuel power plant configurations where the prime mover is a gas turbine rather than a steam turbine, the combustion gasses from the burning fuel 14 may be the motive force for moving the rotatable components of a respective turbine. In such a configuration, the combustion gasses in a gas turbine can serve a similar function to the superheated steam 26 in a steam turbine 28 with respect to the rotation of the rotor 30.

As will be appreciated by those of ordinary skill in the art, the performance, availability, and degradation of a power plant is influenced in part by the various characteristics of the different pieces of equipment found within the power plant 10. These equipment characteristics may include the capability, age, use, and maintenance of the respective component or components. Thus, as various components age or are otherwise used over time, their respective performance characteristics may change, typically degrading. Additionally, predictions generated using the presently disclosed models may be influenced by specific operational characteristics present at a plant 10. For instance, when generating a prediction for a gas turbine base load, important factors may include: the inlet guide vane (IGV) angle, which is the angle that gasses enter the turbine, the inlet pressure drop, which is the pressure drop gasses experience when entering the turbine, and the exhaust pressure drop, which is the pressure drop of gasses upon leaving the turbine. Other external factors, such as ambient temperature, ambient humidity, and atmospheric pressure may also be pertinent to an accurate power plant prediction.

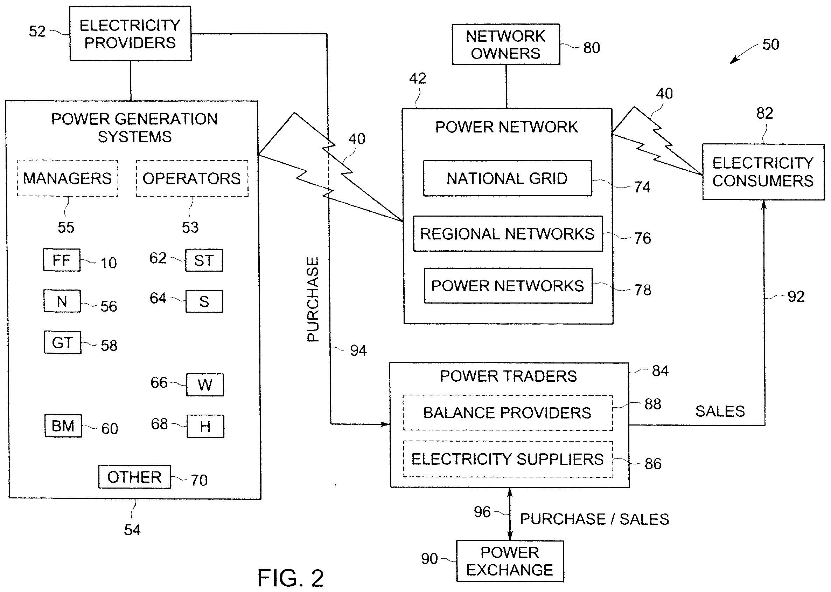

Returning to the figures, electricity 40 produced by the power plant may be sold as a service delivered to specified points. FIG. 2 is a block diagram showing the interaction of different entities within an electrical power distribution system 50 used to distribute the electricity 40. The electricity producers 52 generate electricity using power generation systems 54, including for example, fossil fuel power plants 10, nuclear power plants 56, geothermal power plants 58, biomass power plants 60, solar thermal power plants 62, solar power stations 64, wind energy stations 66, hydroelectric stations 68 and other sources of power 70. Electricity producers 52 could consist of a single power plant, a power station, or a single entity with oversight of multiple power plants or stations of the same or different type. The oversight entity may be a privately-owned utility, an electric cooperative, or a publicly owned utility, such as a city or region -owned utility. Power generation systems 54 may have staff (e.g., on-site personnel) than can include managers 55 and operators 53. Managers 55 may perform tasks that can include overseeing production of electricity and supervision of other staff including power generation system operators 53. Power generation system managers 55 may also be known as power plant managers. Power generation system operators 53 may perform tasks that include operation or control of power generating equipment, including boilers, turbines, generators, and reactors, using control boards or semi-automatic equipment. Power generation system operators 53 may also be known as power plant operators.

The electricity producers 52 feed electricity into one or more power networks 42. As noted previously, a power network 42 includes transformers and transmission lines organized in a national grid 74, regional networks 76, and/or local networks 78. In most cases, the network owners 80 own all or part of the power network 42. Network owners 80 are responsible for transmitting the electrical power 40 from the electricity producers 52 to the electricity consumers 82. Electricity consumers 82, which include everything from industries to households, take electricity 40 from the power network 42 and utilize it.

Power traders 84 may also be involved in the distribution system 50. Power traders 84 may have the role of electricity supplier 86 and/or balance provider 88. Moreover, both roles may exist within the same or different companies. Power traders 84 may have the supply agreement with the consumer and need to ensure that the sales of electricity 92 are always in a state of balance with the purchase of electricity 94 to cover consumption. In some situations, electricity producers 52 sell their electricity 94 to the power traders 84 through a bidding and/or auction process 96. There are organized marketplaces for bidding and/or auctions of electricity 96 called power exchanges 90. Within the power exchanges 90, there are brokers to facilitate transactions.

Notably, any one company may have the multiple roles within the power distribution system 50. For example, one utility may serve as the electricity producer 52 (e.g., operate a fossil fueled power plant), a network owner 80 (e.g., own a local network), and/or be the electricity supplier 86 to the electricity consumer 82. Accordingly, it may be important for one or more of these parties to be able to predict performance capability, availability, and degradation of the individual and collective power generation systems 54.

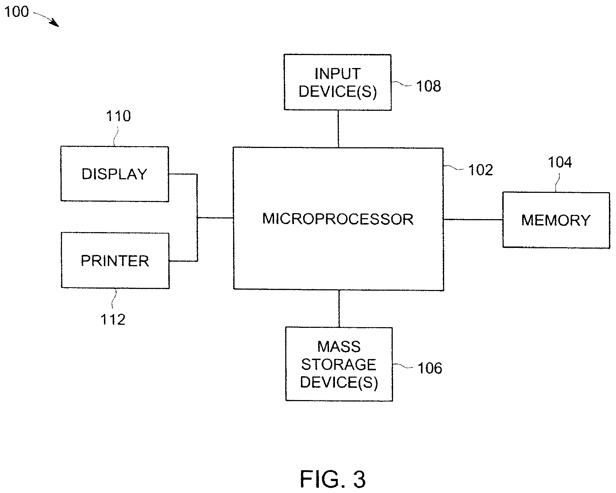

With the foregoing in mind, FIG. 3 depicts an exemplary processor-based system 100 for use in modeling and predicting performance of a power generation system or systems. In one embodiment, the exemplary processor-based system 100 is a general-purpose computer, configured to run a variety of software, including algorithms implementing aspects of the present disclosure. Alternatively, in other embodiments, the processor-based system 100 may comprise, among other things, a mainframe computer, a distributed computing system, or an application-specific computer or workstation specifically designed and configured to implement aspects of the present disclosure using specialized software and/or hardware provided as part of the system. Further, the processor-based system 100 may include either a single processor or a plurality of processors to facilitate implementation of the presently disclosed functionality.

In general, the exemplary processor-based system 100 includes a microprocessor 102, such as a central processing unit (CPU), which executes various routines and processing functions of the system 100. For example, the microprocessor 102 may execute various operating system instructions as well as software routines and/or algorithms stored in or provided by a memory 104 (such as a random access memory (RAM) of a personal computer) or one or more mass storage devices 106 (such as an internal or external hard drive, CD-ROM, DVD, or other magnetic or optical storage device). In addition, the microprocessor 102 processes data provided as inputs for various routines, algorithms, and/or software programs, such as data provided in computer-based implementations of the present disclosure.

Such data may be stored in, or provided by, the memory 104 or mass storage device 106. Alternatively, such data may be provided to the microprocessor 102 via one or more input devices 108. Such input devices 108 may include manual input devices, such as a keyboard, a mouse, or the like. In addition the input devices 108 may include a device such as a network or other electronic communication interface that provides data to the microprocessor 102 from a remote processor-based system or from another electronic device. Such a network communication interface, of course, may be bidirectional, such that the interface also facilitates transmission of data from the microprocessor 102 to a remote processor-based system or other electronic device over a network.

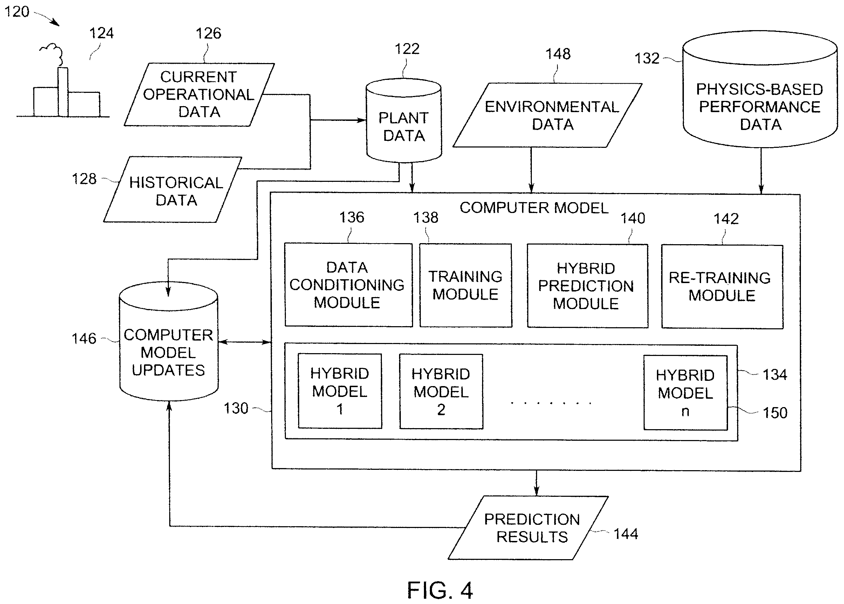

Results generated by the microprocessor 102, such as the results obtained by processing data in accordance with one or more stored routines or algorithms, may be provided to an operator via one or more output devices, such as a display 110 and/or a printer 112. Based on the displayed or printed output, an operator may request additional or alternative processing or provide additional or alternative data, such as via the input device 108. Communication between the various components of the processor-based system 100 may typically be accomplished via a respective chipset and one or more busses or interconnects which electrically connect the components of the system 100. Notably, in certain embodiments the exemplary processor-based system 100 is configured to process power plant data in accordance with one or more algorithms as discussed herein and to run one or more mathematical models to create a prediction for power plant performance, availability, and/or degradation, as discussed in greater detail below with respect to FIGS. 4-7.

An example of a system 120 for generating a prediction for power plant performance, availability, or degradation is illustrated in FIG. 4. In some embodiments, the system 120 may use actual plant data 122 in combination with one or more mathematical models (i.e., algorithms) to simulate the actual future performance, availability, or degradation of a power plant 124. Accordingly, various current operational data 126 and historical data 128 may be collected from the power plant 124 and either input directly to one or more mathematical models, such as a computer model 130, or the data may be stored in a plant database 122 for future use with such a model.

In various embodiments, the system 120 may be adapted to use a wide variety of current operational data 126 and historical data 128 depending on the configuration and operation of the power plant 124. For instance, to facilitate modeling of a power plant gas turbine base load, the current operational data may include IGV angle, inlet pressure drop, exhaust pressure drop, fuel temperature, and/or fuel LHV. In this example, the historical data 128 may include some or all of the above factors along with past measured base loads.

The data 126 and 128 may be directly input by the operator from the power plant or may be acquired from the plant database 122. In one embodiment, the computer model 130 can simulate the impact of one or more potential operational changes on the power plant. In other words, the computer model 130 enables a power plant operator 53, power plant manager 55, power trader 84 or other user (either on- or off the power plant site) to simulate the effects of equipment setting changes on the power plant performance without actually changing any settings at the power plant 124. A user may have one or more parameters of interest associated with power plant performance.

In various embodiments, the computer model 130 may be adapted to receive physics-based performance data 132. The physics-based performance data 132 may comprise data generated using at least one physics-based model of the power plant in place of or in addition to actual operating information from the power plant.

In various embodiments, the computer model 130 may include an array of separate and distinct hybrid models 134 to provide the functionality described above. For instance, the array of hybrid models 134 may include base load models and peak load models for a plurality of gas turbines or steam turbines based on the equipment used at the power plants being modeled. Each of the models exists as a mathematical algorithm generated and updated by the computer model 130.

In certain embodiments, the computer model 130 may include a plurality of modules to enable the creation, maintenance, and accuracy of each of the hybrid models 150. For instance, the computer model 130 may include a data conditioning module 136, a training module 138, a retraining module 142, and a hybrid prediction module 140. Each of these modules is described in further detail below.

Environmental data 148 may also be utilized by the computer model 130 in the generation of prediction results 144. The environmental data 148 may include observed (i.e., current) and/or expected (i.e., future) environmental data for the site of the respective equipment or plant being modeled. As will be appreciated, such expected or predicted environmental data may be useful in implementations where forward looking models or predictions are desired, thereby providing insight into expected or future power generation capabilities. The environmental data 148 may include, but is not limited to, ambient temperature, relative humidity, and/or atmospheric pressure at the site of the respective equipment or plant being modeled. The prediction results 144 may be output from the computer model 130 to be used by plant operators, energy suppliers, power traders, and others. Further the prediction results 144 as well as the array of hybrid models 134 and environmental data 148 may be stored in a database 146 and utilized to update the current computer model 130.

In certain embodiments, the modeling and prediction based upon plant data 122 and/or physics-based performance data 132 utilizes data cleansed of outliers and significant noise. The data conditioning module 136 may include a data segmentation and elimination algorithm so that a fully consistent data set is available to the training module 138. For instance, data conditioning 136 may include median filtering that smoothes out each of the input variables and eliminates many of the outliers in the data.

The training module 138 provides information to the hybrid prediction module 140 in order to create models that can be utilized for prediction as discussed below. Further, in certain embodiments, the training module 138 may utilize plant data 122 or a combination of physics-based performance data 132 and plant data 122. In one approach, the physics-based performance data 132 and plant data 122 may be combined to create an augmented model training and validation data set. Physics-based performance data 132 may be generated through a design of experiments (DOE) performed on a set of pertinent physics-based models. This DOE approach generates a matrix of input-output values over which the hybrid prediction module 140 may be trained and validated.

Further, in certain embodiments, both domain knowledge and data-driven methods are utilized to select the variables for input into the hybrid prediction module 140. For example, correlation testing may occur during the training module 138 to identify high correlation between input variables (X's) and targets (Y's). The subsequent use of highly correlated variables and targets may provide more accurate prediction performance.

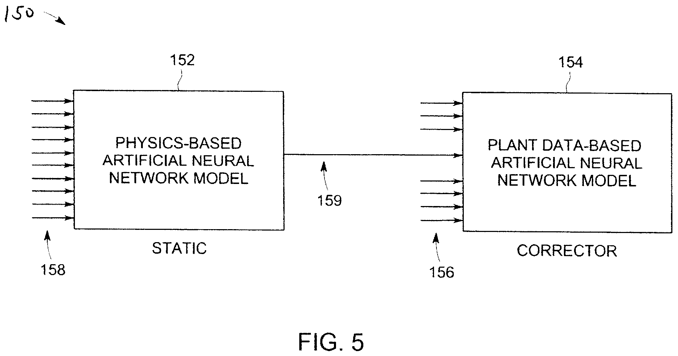

Once fully trained, the hybrid prediction module 140 may generate the hybrid models 150. FIG. 5 is a block diagram of an exemplary hybrid prediction module 140 in accordance with an embodiment of the present invention. Referring to FIG. 5, the hybrid prediction module 140 utilizes a physics-based ANN model 152 (such as a thermo-dynamic model) in conjunction with a plant data-based ANN model 154. As will be appreciated, models other than neural networks may also be employed. In certain embodiments, the physics-based ANN model 152 trained once before the hybrid prediction module 140 is used to generate models to make predictions. In other embodiments, the physics-based ANN model 152 may be trained more than once, such as in an iterative process, before being used in the hybrid prediction training process. In one implementation, the physics-based ANN model 152 is not updated with time, and accordingly, it is referred to as the "static" model.

As an example, a program may be utilized to generate physics-based performance data to train the static model 152 for a gas turbine baseload prediction. Input parameters may be determined and used to create a DOE test matrix. The DOE test matrix is run and the output becomes the static model training data set. Other parameters may be determined for the same piece of equipment or system in order to create additional static model training data sets. Different programs may also be used to generate static model training data for different pieces of plant equipment or systems. Additionally, if no physics-based performance data were available, a large set of plant operating data could be used to train the static model 152. In this situation, ideally the training data set would cover wide ranges of input parameters to obtain an accurate representation of the operating space.

The prediction generated by the static model 152 represents the "baseline" for the parameter being predicted. Depending on the training data used, the prediction based on the static model 152 may differ from the actual performance. The deviation from the baseline may increase with time as the equipment degrades, requiring a correction be applied to the baseline prediction, hence the need for a plant data-based ANN model, also called the "corrector" model 154.

The corrector model 154 may be trained with recent plant operating data. The inputs 156 to the corrector model 154 may include all inputs 158 or a subset of the inputs to the static model 152. In addition, the corrector model 154 receives the output 159 of the static model 152 as an input. As a result, the correction applied is a function of the static prediction.

Since the corrector model 154 adjusts the performance prediction based upon actual recent data collected from the plant, over time the corrector model 154 enables the hybrid models 150 created by the hybrid prediction module 140 to closely reflect actual performance while the baseline (static model 152) remains unchanged. Thus, the use of the corrector model 154 in connection with the static model 152 reduces or eliminates the need to periodically re-baseline and re-tune the static model 152 resulting in minimal downtime for plant equipment.

Consequently, the hybrid modeling approach may perform better than pure physics-based or pure data-based neural network approaches. Use of the static model 152 initially allows establishment of a prediction baseline without any prior training. Moreover, the static model 152 may be trained over the expected range of operating conditions creating a performance baseline over the entire operating envelope, thereby minimizing required extrapolation and offsetting plant operating data sparseness issues.

Returning to FIG. 5, one pair of a physics-based ANN 152 and a data-based ANN model 154 may be utilized in creation of a hybrid model 150 for each performance prediction. For example, a single pair of models (i.e., a single hybrid model 150) may be utilized to make the following predictions: gas turbine load (MW), gas turbine fuel consumption, gas turbine emissions (NOx, CO), and/or steam turbine load (MW).

However, multiple pairs of ANN models (i.e., multiple hybrid models 150) may also be utilized in conjunction with one another, such as to create a model for one prediction or to more effectively model complex system, such as total-plant performance. Indeed, in some embodiments, it may be best to model a parameter or overall (i.e., holistic) assessment criterion using a plurality of hybrid models. For example, it may be determined that different hybrid models better represent the baseload and part load operating modes of a gas turbine. In this case, gas turbine baseload and part load predictions could be made using two separate hybrid models 150 generated using the hybrid prediction module 140 but the combined results of the separate hybrid models 150 may together provide the desired predictions related the gas turbine operating modes. Further, to the extent that more complex concepts (such as the performance of a plant as a whole or a group of subsystems that may be conceptually considered together) may be of interest, such complex results may be modeled using groups (i.e., two or more hybrid models 150). For example, such groups of models may be combined in a weighted, unweighted, hierarchical, and/or conditional arrangement to suitably model the complex parameter (such as total plant performance, overall generator performance, overall turbine performance, and so forth) in question.

The corrector model 154 is maintained through re-training and subsequent re-tuning of the model. The re-training module 142 from FIG. 4 performs this function within the computer model 130. Re-training 142 may be triggered either based on performance (e.g., monitor accuracy and trigger training when performance falls below an acceptable threshold) or based on a time interval (e.g., one time each day, week, month, year, and so forth). If the re-training trigger is performance based, a statistical test may be utilized to diagnose when the models may be degrading in their prediction accuracy. Degraded models may then be re-tuned to provide more accurate predictions. This process achieves self-monitoring and self-update of the hybrid models 150.

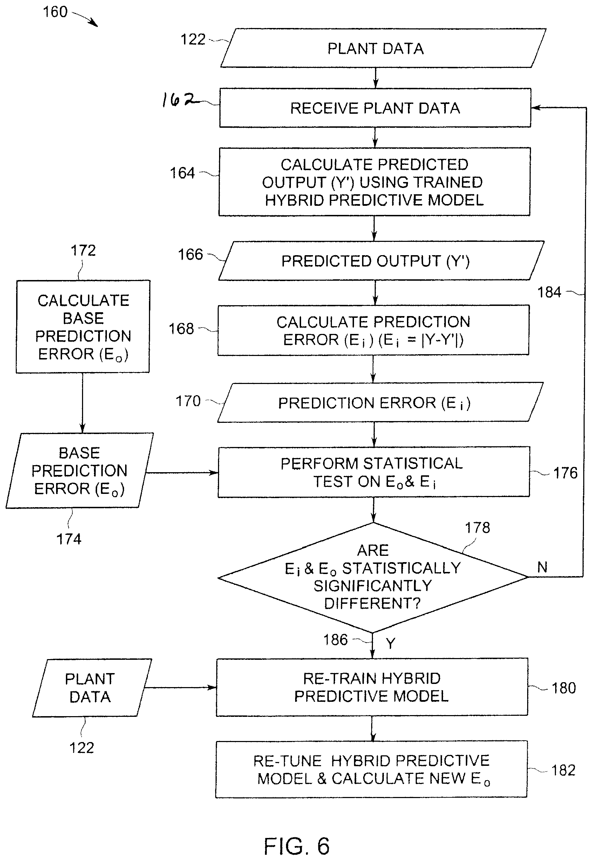

The method for re-training 142 the hybrid models 150 may be better understood with reference to flowchart 160 of FIG. 6. It should be noted that one or more of the exemplary steps indicated in flowchart 160 may be performed by the processor-based system 100 through execution of routines or algorithms of a software application designed to carry out such functions. Alternatively, application specific hardware, firmware, or circuitry may be employed to provide the same functionality.

The method 160 may begin by receiving (block 162) a new window of plant data 122, which includes operational inputs (*X's*) as well as output (*Y*). The processor 102 calculates (block 164) a predicted output (*Y*') 166 using the existing trained hybrid model 150 and the plant data 122. The prediction error (*Eᵢ*) 170 is calculated (block 168) by the difference between the actual output (*Y*) and the predicted output (*Y*') 166.

The calculation (block 172) of the prediction error for the hybrid model test data, also called the base prediction error (*Eₒ*) 174, involves using an initial data set with a total length of (*D₀* + *w₀*). The first *D₀* data points are used for training and validating the initial hybrid model and the last *w₀* points of data are reserved for testing and obtaining the base prediction error 174.

Next, the processor 102 performs (block 176) a statistical test on the prediction error *(Eᵢ)* 170 and the base prediction error *(Eₒ)* 174. Any hypothesis test may serve as the statistical test. For instance, the Wilcoxon rank sum test (WRST) is proposed for its advantages. If the statistical test result indicates (block 178) the prediction errors, *Eₒ* and *Eᵢ*, are not statistically significantly different 184, the process begins again with receiving (block 162) new plant data 122. If, on the other hand, there is a statistically significant difference between *Eₒ* and *Eᵢ* 186, the hybrid model will then be re-trained (block 180) with the plant data 122, including operational and output data. However, if the number of data points in the plant data set 122 is overwhelmingly large, a certain portion of oldest data points may be eliminated from the data set. The amount of data used for model re-train is an important factor; enough data is required to get a good model representation, but it is essential to avoid using old data that does not accurately reflect the current state of the equipment. After the hybrid predictive model re-training, both network parameters and the base prediction errors, *E₀*, are re-tuned (block 182) and used for subsequent windows of plant data 122. As may be appreciated from the foregoing, the hybrid model 150, when deployed, is continuously monitored in its prediction performance. It is notable, that the re-training method 160 may be performed individually for each of the hybrid models 150 that exist for the different parameters to be predicted (e.g., baseload, NOx, CO).

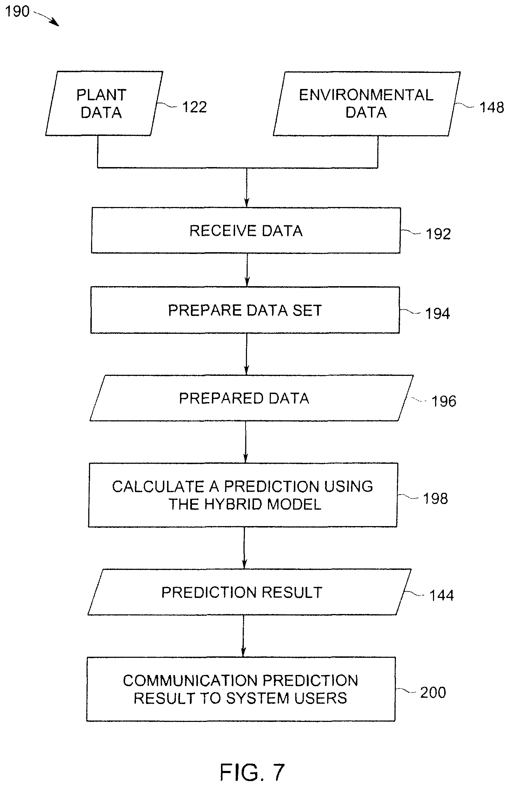

The method for generation of a prediction 144 for power plant performance, availability, or degradation using a hybrid model 150 may be better understood with reference to flowchart 190 of FIG. 7. It should be noted that one or more of the exemplary steps indicated in flowchart 190 may be performed by the processor-based system 100 through execution of routines or algorithms of a software application adapted for carrying out such functions. Alternatively application specific hardware, firmware, or circuitry may be employed to provide the same functionality.

The method of generating a prediction 190 begins with the processor 102 receiving (block 192) both plant data 122 and environmental data 148. As noted previously, environmental data 148 may include meteorological data, such as ambient temperature, relative humidity and/or atmospheric pressure, obtained for the relevant site. The processor 102 prepares (block 194) the data set 196 for the hybrid model 150. The processor 102 calculates (block 198) the prediction result 144 using the hybrid model 150. Then the processor 102 communicates (block 200) the prediction result 144 to the system user via the display 110 or the printer 112.

In certain embodiments, the method of FIG. 7 may be used to predict the capability, availability, and degradation of multiple power plants interconnected over a networked environment. The prediction outputs 94 may be used to dynamically observe and to analyze performance of individual power plants, subsets of the power plants in a network, and/or an entire network of power plants.

Certain technical effects of the present disclosure include the generation and/or utilization of a hybrid model to predict one or more performance aspects associated with one or more power plants. The operation or management of the power plant or power plants may be based on the outputs of one or more of the disclosed hybrid models. The hybrid model may constitute one or more neural networks. Further, the hybrid model may constitute a static model, such as may be based on physical principles and factors, and a corrector or dynamic model, such as may be based on measured or observed plant data. In such an embodiment, the output of the static model may be an input to the corrector model.

This written description uses examples to disclose the invention, including the preferred mode, and also to enable any person skilled in the art to practice the invention, including making and using any devices or systems and performing any incorporated methods. As may be appreciated, to the extent that examples or embodiments are provided to facilitate explanation of the present disclosure, such examples and embodiments, even if not stated explicitly, may be combined even if not explicitly discussed in combination with one another. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method for predicting a parameter of interest for a power plant (124) comprising:
receiving a power plant data set (122) and an environmental data set (148) as inputs to a processor (102), wherein the environmental data set (148) comprises at least one of observed or expected environmental data;
on the processor (102), processing the power plant data set (122) and the environmental data set (148) using one or more hybrid predictive models (150) comprising a static baseline model (152) which generates a baseline prediction of a parameter of interest (159) for the power plant and a dynamic corrector model which receives the baseline prediction of the parameter of interest (159) from the static baseline model (152) and plant operational data as an input and generates a corrected prediction of the parameter of interest.

2. The method of claim 1, comprising cleansing the power plant data set (122) and the environmental data set (148) prior to subsequent processing.

3. The method of any preceding claim, comprising communicating the corrected prediction (144) to at least one user.

4. The method of claim 3, wherein the at least one user comprises one or more of power plant operators (53), power plant managers (55) or power traders (84).

5. The method of any preceding claim, wherein the power plant data set (122) comprises operational data (126) for the power plant (124).

6. The method of any preceding claim, wherein the environmental data set (148) comprises one or more of ambient temperature, relative humidity, or atmospheric pressure for the power plant.

7. The method of any preceding claim, wherein the parameter of interest comprises an indicator of performance, availability, or degradation of the power plant or a component of the power plant (124).

8. The method of any preceding claim, wherein the parameter of interest comprises an indication of total-plant performance.

9. The method of any preceding claim, wherein one or both of the static baseline model (152) or the dynamic corrector model (154) comprise respective artificial neural networks.

10. The method of any of claims 2 to 9, wherein the cleansing comprises one or more of data segmentation, data elimination, or median filtering.

11. The method of any preceding claim, wherein the static baseline model comprises a physics-based model representing a baseline performance for a power plant or a component of the power plant.

12. The method of any preceding claim, wherein the dynamic corrector model (154) comprises a data-based model representing a correction factor related to the current performance of a power plant or a component of the power plant.

13. A processor-based system (100), comprising:
a microprocessor (102), and
a memory (104) storing one or more hybrid predictive models (134), comprising:
a static baseline model (152), which, when executed on the microprocessor (102), generates a baseline prediction of a parameter of interest (159) for the power plant;
a dynamic corrector model (154) which, when executed on the microprocessor (102), receives the baseline prediction of the paramter of interest (159) from the static baseline model (152) and plant operational data as an input and generates a corrected prediction of the parameter of interest;
wherein said microprocessor (102) is configured to:
receive a power plant data set (122) and an environmental data set (148), wherein the environmental data set (148) comprises at least one of observed or expected environmental data;
process the power plant data set (122) and the environmental data set (148) using the one or more hybrid predictive models (150), and
generate, as an output, at least one prediction (144) of the parameter of interest using the one or more hybrid predictive models (150).

14. The processor-based system of claim 13, wherein one or both of the static, model (152) or the dynamic corrector model (154) comprise respective artificial neural networks.

15. The processor-based system of claim 13, wherein the baseline prediction of a parameter of interest (159) for the power plant represents a baseline performance value for the power plant or a component of the power plant and the corrected output represents the predicted performance value for the power plant or the component of the power plant based on current operational data (126).

## Patentansprüche

1. Verfahren zur Vorhersage eines Parameters von Interesse für ein Kraftwerk (124), umfassend:
Empfangen eines Kraftwerkdatensatzes (122) und eines Umweltdatensatzes (148) als Eingänge in einen Prozessor (102), wobei der Umweltdatensatz (148) zumindest eines von beobachteten oder erwarteten Umweltdaten umfasst;
auf dem Prozessor (102), Verarbeiten des Kraftwerkdatensatzes (122) und des Umweltdatensatzes (148) unter Verwendung eines oder mehrerer hybrider Vorhersagemodelle (150), umfassend ein statisches Grundlinienmodell (152), das eine Grundlinienvorhersage eines Parameters von Interesse (159) für das Kraftwerk generiert, und ein dynamisches Korrekturmodell, das die Grundlinienvorhersage des Parameters von Interesse (159) vom statischen Grundlinienmodell (152) und Werkbetriebsdaten als einen Eingang empfängt und eine korrigierte Vorhersage des Parameters von Interesse generiert.

2. Verfahren nach Anspruch 1, umfassend eine Bereinigung des Kraftwerkdatensatzes (122) und des Umweltdatensatzes (148) vor einer anschließenden Verarbeitung.

3. Verfahren nach einem der vorstehenden Ansprüche, umfassend ein Kommunizieren der korrigierten Vorhersage (144) zu mindestens einem Anwender.

4. Verfahren nach Anspruch 3, wobei der zumindest eine Anwender einen oder mehrere Kraftwerksbetreiber (53), Kraftwerksmanager (55) oder Stromhändler (84) umfasst.

5. Verfahren nach einem der vorstehenden Ansprüche, wobei der Kraftwerkdatensatz (122) Betriebsdaten (126) für das Kraftwerk (124) umfasst.

6. Verfahren nach einem der vorstehenden Ansprüche, wobei der Umweltdatensatz (148) eines oder mehrere von Umgebungstemperatur, relativer Feuchte oder atmosphärischem Druck für das Kraftwerk umfasst.

7. Verfahren nach einem der vorstehenden Ansprüche, wobei der Parameter von Interesse einen Indikator für Leistung, Verfügbarkeit oder Verschlechterung des Kraftwerks oder einer Komponente des Kraftwerks (124) umfasst.

8. Verfahren nach einem der vorstehenden Ansprüche, wobei der Parameter von Interesse eine Anzeige einer Gesamtwerksleistung umfasst.

9. Verfahren nach einem der vorstehenden Ansprüche, wobei eines oder beide des statischen Grundlinienmodells (152) oder des dynamischen Korrekturmodells (154) entsprechende künstliche neurale Netzwerke umfassen.

10. Verfahren nach einem der Ansprüche 2 bis 9, wobei die Bereinigung eines oder mehrere von Datensegmentierung, Dateneliminierung oder Zentralwertfiltern umfasst.

11. Verfahren nach einem der vorstehenden Ansprüche, wobei das statische Grundlinienmodell ein auf Physik basierendes Modell umfasst, das eine Grundlinienleistung für ein Kraftwerk oder eine Komponente des Kraftwerks darstellt.

12. Verfahren nach einem der vorstehenden Ansprüche, wobei das dynamische Korrekturmodell (154) ein auf Daten basierendes Modell umfasst, das einen Korrekturfaktor darstellt, der sich auf die Stromleistung eines Kraftwerks oder einer Komponente des Kraftwerks bezieht.

13. Prozessor-basiertes System (100), umfassend:
einen Mikroprozessor (102) und
einen Speicher (104), der ein oder mehrere hybride Vorhersagemodelle (134) speichert, umfassend:
ein statisches Grundlinienmodell (152), das, wenn es auf dem Mikroprozessor (102) ausgeführt wird, eine Grundlinienvorhersage eines Parameters von Interesse (159) für das Kraftwerk generiert;
ein dynamisches Korrekturmodell (154), das, wenn es auf dem Mikroprozessor (102) ausgeführt wird, die Grundlinienvorhersage des Parameters von Interesse (159) vom statischen Grundlinienmodell (152) und Werkbetriebsdaten als einen Eingang empfängt und eine korrigierte Vorhersage des Parameters von Interesse generiert;
wobei der Mikroprozessor (102) konfiguriert ist zum:
Empfangen eines Kraftwerkdatensatzes (122) und eines Umweltdatensatzes (148), wobei der Umweltdatensatz (148) zumindest eines von beobachteten oder erwarteten Umweltdaten umfasst;
Verarbeiten des Kraftwerkdatensatzes (122) und des Umweltdatensatzes (148) unter Verwendung des einen oder der mehreren hybriden Vorhersagemodelle (150) und
Generieren, als einen Ausgang, zumindest einer Vorhersage (144) des Parameters von Interesse unter Verwendung des einen oder der mehreren hybriden Vorhersagemodelle (150).

14. Prozessor-basiertes System nach Anspruch 13, wobei eines oder beide des statischen Modells (152) oder des dynamischen Korrekturmodells (154) entsprechende künstliche neurale Netzwerke umfassen.

15. Prozessor-basiertes System nach Anspruch 13, wobei die Grundlinienvorhersage eines Parameters von Interesse (159) für das Kraftwerk einen Basislinienleistungswert für das Kraftwerk oder eine Komponente des Kraftwerks darstellt und der korrigierte Ausgang den vorhergesagten Leistungswert für das Kraftwerk oder eine Komponente des Kraftwerks auf Basis von aktuellen Betriebsdaten (126) darstellt

## Revendications

1. Procédé de prévision d'un paramètre d'intérêt pour une centrale électrique (124) comprenant les étapes consistant à :
recevoir un ensemble de données de centrale électrique (122) et un ensemble de données environnementales (148) en tant qu'entrées dans un processeur (102), dans lequel l'ensemble de données environnementales (148) comprend au moins certaines de données environnementales observées ou attendues ;
sur le processeur (102), traiter l'ensemble de données de centrale électrique (122) et l'ensemble de données environnementales (148) en utilisant un ou plusieurs modèles prédictifs hybrides (150) comprenant un modèle de base statique (152) qui génère une prédiction de base d'un paramètre d'intérêt (159) pour la centrale électrique et un modèle de correcteur dynamique qui reçoit la prédiction de base du paramètre d'intérêt (159) en provenance du modèle de base statique (152) et des données opérationnelles de centrale en tant qu'entrée et génère une prédiction corrigée du paramètre d'intérêt.

2. Procédé selon la revendication 1, comprenant le nettoyage de l'ensemble de données de la centrale (122) et de l'ensemble de données environnementales (148) avant un traitement suivant.

3. Procédé selon l'une quelconque des revendications précédentes, comprenant la communication de la prédiction corrigée (144) à au moins un utilisateur.

4. Procédé selon la revendication 3, dans lequel le au moins un utilisateur comprend un ou plusieurs parmi des opérateurs de centrale électrique (53), des gestionnaires de centrale électrique (55) ou des négociants d'énergie (84).

5. Procédé selon l'une quelconque des revendications précédentes, dans lequel l'ensemble de données de centrale électrique (122) comprend des données opérationnelles (126) pour la centrale électrique (124).

6. Procédé selon l'une quelconque des revendications précédentes, dans lequel l'ensemble de données environnementales (148) comprend une ou plusieurs parmi une température ambiante, une humidité relative ou une pression atmosphérique pour la centrale électrique.

7. Procédé selon l'une quelconque des revendications précédentes, dans lequel le paramètre d'intérêt comprend un indicateur de performance, de disponibilité ou de dégradation de la centrale électrique ou d'un composant de la centrale électrique (124).

8. Procédé selon l'une quelconque des revendications précédentes, dans lequel le paramètre d'intérêt comprend une indication de la performance totale de la centrale.

9. Procédé selon l'une quelconque des revendications précédentes, dans lequel l'un du modèle de base statique (152) ou du modèle de correcteur dynamique (154), ou les deux, comprend des réseaux neuronaux artificiels respectifs.

10. Procédé selon l'une quelconque des revendications 2 à 9, dans lequel le nettoyage comprend un ou plusieurs parmi une segmentation de données, une élimination de données ou un filtrage médian.

11. Procédé selon l'une quelconque des revendications précédentes, dans lequel le modèle de base statique comprend un modèle basé sur la physique représentant une performance de base pour une centrale électrique ou un composant de la centrale électrique.

12. Procédé selon l'une quelconque des revendications précédentes, dans lequel le modèle de correcteur dynamique (154) comprend un modèle basé sur des données représentant un facteur de correction relatif à la performance actuelle d'une centrale électrique ou d'un composant de la centrale électrique.

13. Système à base de processeur (100), comprenant :
un microprocesseur (102), et
une mémoire (104) stockant un ou plusieurs modèles prédictifs hybrides (134), comprenant :
un modèle de base statique (152) qui, lorsqu'il est exécuté sur le microprocesseur (102), génère une prédiction de base d'un paramètre d'intérêt (159) pour la centrale électrique ;
un modèle de correcteur dynamique (154) qui, lorsqu'il est exécuté sur le microprocesseur (102), reçoit la prédiction de base du paramètre d'intérêt (159) à partir du modèle de base statique (152) et des données de fonctionnement de centrale en tant qu'entrée et génère une prédiction corrigée du paramètre d'intérêt ;
dans lequel ledit microprocesseur (102) est configuré pour :
recevoir un ensemble de données de centrale électrique (122) et un ensemble de données environnementales (148), dans lequel l'ensemble de données environnementales (148) comprend au moins certaines de données environnementales observées ou attendues ;
traiter l'ensemble de données de centrale électrique (122) et l'ensemble de données environnementales (148) en utilisant les un ou plusieurs modèles prédictifs hybrides (150), et
générer, en tant que sortie, au moins une prédiction (144) du paramètre d'intérêt en utilisant les un ou plusieurs modèles prédictifs hybrides (150).

14. Système à base de processeur selon la revendication 13, dans lequel l'un du modèle statique (152) ou du modèle de correcteur dynamique (154), ou les deux, comprend des réseaux neuronaux artificiels respectifs.

15. Système à base de processeur selon la revendication 13, dans lequel la prédiction de base d'un paramètre d'intérêt (159) pour la centrale électrique représente une valeur de performance de base pour la centrale électrique ou un composant de la centrale électrique et la sortie corrigée représente la valeur de performance prédite de la centrale électrique ou du composant de la centrale électrique sur la base de données opérationnelles actuelles (126).
